(19) **Europäisches Patentamt / European Patent Office / Office européen des brevets**

(11) **EP 2 780 377 B1**

(12) **FASCICULE DE BREVET EUROPEEN**

(45) Date de publication et mention de la délivrance du brevet:
**09.09.2020 Bulletin 2020/37**

(21) Numéro de dépôt: **12795567.2**

(22) Date de dépôt: **16.11.2012**

(51) Int Cl.:
*C08B 30/14* (2006.01)    *C08B 30/18* (2006.01)
*C08L 3/02* (2006.01)    *D21H 19/54* (2006.01)
*C09J 103/02* (2006.01)    *C09D 103/02* (2006.01)
*D21H 17/28* (2006.01)

(86) Numéro de dépôt international:
**PCT/FR2012/052650**

(87) Numéro de publication internationale:
**WO 2013/072638 (23.05.2013 Gazette 2013/21)**

(54) **DEXTRINES PARTIELLEMENT SOLUBLES DE HAUT POIDS MOLÉCULAIRE**

TEILWEISE LÖSLICHE DEXTRINE VON HOHEM MOLEKULARGEWICHT

PARTIALLY SOLUBLE DEXTRINS OF HIGH MOLECULAR WEIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2011 FR 1160559**
**18.11.2011 FR 1160560**
**16.05.2012 FR 1254540**
**16.05.2012 FR 1254539**

(43) Date de publication de la demande:
**24.09.2014 Bulletin 2014/39**

(73) Titulaire: **Roquette Frères**
**62136 Lestrem (FR)**

(72) Inventeurs:
• **MESNAGER, Julien**
**F-83200 Toulon (FR)**
• **WIATZ, Vincent**
**F-59160 Lomme (FR)**

(74) Mandataire: **Plasseraud IP**
**66, rue de la Chaussée d'Antin**
**75440 Paris Cedex 09 (FR)**

(56) Documents cités:
**EP-A1- 0 538 146    EP-A2- 0 368 451**
**FR-A1- 2 291 788    FR-A1- 2 909 392**
**US-A- 2 818 357**

**Description**

L'invention a pour objet un nouvel procédé de fabrication d'un amidon modifié de masse moléculaire et de solubilité définies. Également divulgués ici sont l'utilisation de cet amidon modifié pour la fabrication de nouvelles compositions de liant aqueux, ainsi que cet amidon modifié.

Dans l'industrie du papier et du carton, il existe de nombreuses qualités différentes de produits. Les papiers et cartons de haute qualité, par exemple ceux utilisés pour les magazines ou les plaquettes de communication, sont généralement des papiers ou cartons couchés, regroupés sous le terme « papiers couchés » dans la présente demande. Un papier couché est un papier dont la surface est recouverte d'une ou plusieurs « couches », généralement à base de pigments en mélange avec des liants et des produits d'addition divers.

Ces couches sont appliquées par un procédé de couchage qui est réalisé à l'aide de compositions aqueuses appelées « sauces de couchage ». Le but de cette opération est de rendre la surface du papier, qui est rugueuse et macroporeuse en l'absence de traitement, unie et microporeuse, ceci afin de permettre une meilleure reproduction des impressions. De plus, on peut par cette opération réaliser une amélioration de la blancheur, du brillant, ou encore du toucher du papier imprimé.

Les papiers couchés doivent également présenter une bonne résistance à l'arrachement humide, qui peut être déterminée par un appareil IGT (Institut voor Graphisce Technieck). Cette propriété est très importante dans le domaine des papiers couchés car elle permet d'obtenir une bonne qualité d'impression, en particulier dans le cas des impressions off-set. En effet, lors du procédé d'impression, on réalise des applications successives de différentes encres grasses de couleur sur le papier. Afin d'avoir une impression nette, des rouleaux encreurs, qui servent d'empreinte, sont recouverts de zones d'encre grasse et de zones d'eau de mouillage, qui est une composition à base aqueuse, ces zones d'eau de mouillage empêchant l'encre grasse d'imprimer le papier dans les zones où elle ne doit pas l'être. La présence d'eau sur le rouleau permet ainsi de délimiter les zones à imprimer. Cette eau va donc humidifier le papier lors du procédé d'impression. L'encre est alors appliquée sur un papier légèrement humide et il est nécessaire que la couche soit résistante à cette humidité pour que l'impression soit de qualité.

Pour réaliser le papier couché, on applique ainsi une ou plusieurs fines couches de compositions de couchage, que l'on fait sécher sur le papier. Cette composition est appliquée par enduction en continu sur un papier, généralement par les techniques dites de *film press* ou couchage par lame (en anglais *blade coating*).

L'épaisseur de la couche peut être réglée en ajustant la pression et la vitesse de défilement du papier.

Ces papiers ou cartons couchés peuvent ensuite être utilisés dans des procédés d'impression, par exemple de type off set, héliogravure, rotogravure, lithogravure, jet d'encre ou flexographie.

Dans la sauce de couchage, les liants ont pour fonction de faire coller les pigments entre eux dans la couche obtenue, ainsi que de faire adhérer la couche au papier. Cette couche est obtenue après séchage de ladite sauce lors du procédé de couchage du papier.

Les quantités de pigments dans la sauce sont généralement très élevées (généralement supérieures à 50% de la matière sèche de la sauce). Par ailleurs, cette sauce comprend généralement des quantités d'eau assez limitées, généralement inférieures à 60%, voire inférieures à 50%, en masse totale de la sauce de couchage. En effet, la couche étant obtenue par séchage de la sauce appliquée lors du procédé de couchage, il est avantageux que la quantité en eau dans la sauce soit faible afin de pouvoir obtenir rapidement le papier couché par évaporation de l'eau et utiliser peu d'énergie afin d'éliminer cette eau.

Parallèlement, il est également nécessaire que la viscosité de la sauce de couchage ne soit pas trop élevée, et ceci malgré la faible quantité d'eau comprise dans la sauce. Ceci permet d'appliquer aisément la sauce : si cette dernière n'est pas assez fluide, il est nécessaire de ralentir le procédé de couchage afin d'obtenir une couche ayant l'épaisseur désirée.

Les liants généralement utilisés dans les sauces sont des polymères styréniques, par exemple de type styrène-butadiène ou styrène-acrylate, qui sont utilisés sous forme de dispersions dans l'eau, autrement dit des « latex ». Ces latex sont fluides, ce qui permet de fabriquer des sauces ayant un comportement rhéologique très bien adapté au procédé de couchage sur le papier.

De plus, les propriétés du papier obtenu sont excellentes, ce qui s'explique par une excellente adhérence des charges entre elles ainsi que par un très bon collage de la couche avec le papier.

L'imprimabilité et la résistance des papiers couchés obtenus sont par ailleurs excellentes.

Cependant, ces dispersions peuvent être relativement instables en fonction des conditions de stockage. Ce stockage ne peut être fait sous forme sèche, ce qui implique, du fait de la présence d'eau, des coûts de transport supplémentaires. De plus, elles sont produites à partir de ressources pétrolières, non renouvelables. Ces dispersions peuvent donc être relativement coûteuses. Enfin, les sauces de couchage contenant uniquement comme liant des dispersions styréniques classiques présentent une mauvaise rétention d'eau, c'est-à-dire que de l'eau doit être ajoutée continuellement dans la sauce lors du procédé de couchage afin que cette sauce conserve sa viscosité initiale et que la machinabilité de la sauce soit maintenue lors du procédé.

Ainsi, il a été proposé depuis quelques années de remplacer, en tout ou partie, ces dispersions par des produits d'origines renouvelables. Ces produits peuvent être des amidons modifiés, qui doivent être au moins partiellement solubilisés dans la sauce pour pouvoir apporter la fonction de liant.

Les amidons modifiés peuvent être préparés par différents types de conversions, par exemple par voie chimique ou par voie enzymatique.

De manière schématique, on considère généralement que pour augmenter la solubilité d'un amidon, il est nécessaire d'en diminuer la masse moléculaire.

Ainsi, si ces amidons modifiés présentent une masse moléculaire élevée, celle-ci est combinée à une faible solubilité dans l'eau. A titre d'exemple, on peut citer l'amidon modifié STABILYS® A023, qui est une dextrine commercialisée par la Demanderesse, qui présente une masse moléculaire moyenne en poids d'environ 300 000 Da et une solubilité dans l'eau d'environ 5 %. Au contraire, il peut également s'agir de dérivés fortement solubles présentant une faible masse moléculaire. C'est le cas de la dextrine STABILYS® A046, également commercialisée par la Demanderesse, qui présente une masse moléculaire moyenne en poids d'environ 25 000 Da et une solubilité dans l'eau d'environ 90 %.

A titre d'exemple de sauce de couchage comprenant un amidon modifié, on peut citer le document WO 2005/003456 A1 au nom de la Demanderesse, qui décrit une composition intermédiaire d'un amidon particulier de légumineuses modifié, qui peut être utilisée dans des sauces de couchage.

Cependant, ces compositions intermédiaires présentent l'inconvénient d'avoir une viscosité qui augmente fortement avec la quantité d'amidon. Bien que leur utilisation soit possible, cela pose des problèmes de viscosité assez élevée de la sauce finalement obtenue. Il en découle que le procédé doit être fortement ralenti, par rapport à un procédé utilisant des dispersions de polymères styréniques, afin de pouvoir réaliser le couchage du papier

Le document WO 2008/074957 décrit l'utilisation d'amidon modifié pour la fabrication de sauces de couchage présentant une masse moléculaire élevée et une température de transformation sol/gel particulière. Ces amidons modifiés sont faiblement solubles à température ambiante. Ils subissent une étape de cuisson en Jet-Cooker en solution aqueuse avant d'être utilisés pour la fabrication de la sauce de couchage. Il en résulte une composition aqueuse ayant une matière sèche assez élevée, qui est utilisée pour fabriquer la sauce de couchage, cette composition étant plus fluide que celles réalisées à partir des amidons modifiés classiques. Les propriétés du papier couché obtenu sont tout à fait satisfaisantes.

Toutefois, même si les problèmes de viscosité élevée et de masse sèche de la composition de couchage sont partiellement résolus, il reste encore nécessaire de les améliorer.

Le document EP 1 964 969 A1 décrit quant à lui une sauce de couchage qui comprend un amidon de masse moléculaire et de solubilités définies et présentant une structure granulaire. Cet amidon permet de diminuer le coût des sauces de couchage, par rapport aux sauces comprenant d'autres amidons solubles à froid, tout en permettant d'augmenter la masse sèche des compositions de couchage.

Cette sauce de couchage n'est toutefois pas satisfaisante, notamment en termes de résistance à l'arrachement humide.

Il est du mérite de la Demanderesse d'avoir pu fabriquer de nouveaux amidons modifiés, utiles notamment à la fabrication de sauces de couchage, qui présentent des propriétés différentes de ceux déjà connus. En particulier, la Demanderesse est parvenue, tout en conservant une bonne solubilité dans l'eau froide, à conserver une masse moléculaire de l'amidon élevée.

## Résumé de l'invention

L'invention a ainsi pour objet un procédé d'obtention d'une amidon modifié caractérisé en ce qu'il présente :

- une masse moléculaire moyenne en poids allant de 250 000 à 2 000 000 Da ;
- une solubilité, mesurée selon un test A, allant de 50 à 85%.

Ces amidons modifiés présentent l'avantage de combiner une solubilité dans l'eau froide ainsi qu'une masse moléculaire relativement élevées. Ils permettent d'obtenir, grâce à la combinaison de ces propriétés *a priori* contradictoires, des compositions de liant aqueux présentant une matière sèche élevée ainsi qu'une faible viscosité.

En particulier, ces compositions peuvent être utilisées avantageusement dans le domaine du couchage. En effet, en plus de répondre aux exigences déjà présentées, lesdites compositions ont l'avantage de permettre d'obtenir un procédé de couchage de haute machinabilité, par rapport aux procédés utilisant les sauces déjà connues. Le papier couché obtenu présente l'avantage de présenter de bonnes propriétés, et en particulier une excellente résistance à l'arrachement humide.

## Description détaillée

L'amidon modifié présente donc des caractéristiques particulières de masse moléculaire et de solubilité aqueuse.

En ce qui concerne la masse moléculaire (M) de l'amidon modifié, elle est exprimée en Da et peut être déterminée par l'homme du métier à l'aide d'une chromatographie d'exclusion stérique de type HPSEC-MALLS (*High Performance Size Exclusion Chromatography coupled on-line with Multiple Angle Laser Light Scattering*).

On peut mesurer cette masse par chromatographie d'exclusion stérique, selon le protocole suivant :

- préparation d'un échantillon par solubilisation de l'amidon modifié, en chauffant à 100°C pendant 30 min dans un solvant de dilution constitué d'un mélange DMSO / NaNO$_3$ (0,1M de NaNO3 dans le DMSO), ledit échantillon pouvant présenter une concentration allant de 2 à 10 mg d'amidon par mL de solvant de dilution ;
- utilisation d'un appareil de chromatographie liquide à haute performance (CLHP) équipé d'une pompe, fonctionnant en mode isocratique, faisant circuler un solvant d'élution à 0,3mL/mn, d'un réfractomètre, d'un détecteur *laser multiple angle light scattering* de 18 angles chauffé à 35°C, par exemple un détecteur DAWN DSP de la société Wyatt, et d'un four de thermostatisation des colonnes chauffé à 35°C, par exemple équipé de colonnes de polyhydroxyméthacrylate de type SUPREMA et dont le solvant d'élution est par exemple une solution aqueuse de nitrate de sodium à 0,1 M, contenant 0,02 % en masse d'azide de sodium ;
- injection dans l'appareil d'un volume d'échantillon d'environ 100 μL.

Les masses moléculaires moyennes en poids et en nombre peuvent être déterminées à partir des spectres obtenus, par exemple, en retraitant les spectres en exponentiel 1er ordre, à l'aide du logiciel d'analyse de type ASTRA v.4.

La solubilité est quant à elle mesurée selon le test A, qui consiste en la méthode suivante :

- prélever une masse de prise d'essai (m prise essai) d'environ 5,0 g d'amidon modifié, cette masse étant exprimée en masse sèche ;
- dispersion de cette masse dans 200 mL d'eau à 22°C dans un erlen, qui est ensuite placé à 22°C au bain marie pendant 4 heures sous agitation magnétique avec une agitation de 5 minutes toutes les 30 minutes ;

- Filtration du contenu du flacon sur un filtre de porosité 8 pm, par exemple de type Whattamn 2 V ;
- pipetage de 50 mL de filtrat et introduction de cette quantité dans un cristallisoir sec et taré ;
- évaporation l'eau du cristallisoir par chauffage à 60°C pendant 45 minutes, puis à 130°C pendant 90 minutes ;
- après refroidissement dans un dessiccateur, peser la masse d'amidon obtenue après séchage (m extrait sec).

La solubilité est calculée de la façon suivante :

```
Solubilité = [m extrait sec × 200 × 100] / [50 × m prise
essai]
```

La masse sèche de la prise d'essai est calculée selon la norme ISO 1666:1996.

L'amidon modifié selon l'invention présente avantageusement un indice de polydispersité supérieur à 5, de préférence supérieur à 10, et plus préférentiellement encore supérieur à 15.

L'amidon modifié selon l'invention peut présenter une masse moléculaire moyenne en nombre supérieure à 20000 Da, préférentiellement supérieure à 25000 Da, et plus préférentiellement encore supérieure à 30000 Da

Préférentiellement, la solubilité de l'amidon modifié va de 55 à 65%.

Préférentiellement, l'amidon modifié présente une masse moléculaire moyenne en poids allant de 380 000 Da à 1 400 000 Da.

L'amidon modifié selon l'invention peut présenter une fraction massique supérieure à 5% de molécules d'amidon de masse moléculaire supérieure à 1000000 Da, de préférence une fraction comprise entre 5 et 25%.

Préférentiellement, l'amidon modifié comprend, par rapport au poids total d'amidon modifié :

- une fraction massique comprise entre 5 et 25% de molécules d'amidon de masse moléculaire supérieure à 1 000 000 Da,
- une fraction massique comprise entre 25 et 50% de molécules d'amidon de masse moléculaire supérieure à 100 000 Da et inférieure ou égale à 1 000 000 Da,
- une fraction massique comprise entre 30 et 50% de molécules d'amidon de masse moléculaire supérieure à 10 000 Da et inférieure ou égale à 100 000 Da,
- une fraction massique inférieure à 20% de molécules d'amidon de masse moléculaire inférieure ou égale à 10 000 Da.

L'amidon modifié selon l'invention peut être une dextrine, c'est-à-dire qu'elle peut être obtenue par une étape de dextrinification.

De nombreux procédés de modification d'amidon et en particulier de dextrinification ont été développés, ces procédés utilisant l'action de la chaleur, dans un milieu sec ou non, en présence ou non d'agent chimique. Pour la plupart, qu'ils soient discontinus ou continus, ces procédés font appel à des températures de transformation supérieures à 100°C et à la présence facultative d'un acide, d'un agent alcalin et / ou d'un agent oxydant.

Les dextrines sont généralement classées en trois catégories regroupant :

- les dextrines blanches, généralement obtenues par transformation de l'amidon à des températures souvent comprises entre 120 et 170°C, en présence d'agent(s) chimique(s), notamment d'acide, en quantités relativement élevées,
- les dextrines jaunes, souvent fabriquées par transformation de l'amidon à des températures plus élevées, généralement comprises entre 170 et 230°C, en présence d'agent(s) chimiques, notamment d'acide,
- les dextrines dites « British GUM » obtenues par la seule action de la chaleur, à température élevée, souvent supérieure à 230°C.

Les procédés de dextrinification génèrent différentes réactions. L'importance de chacune d'elles varie avec les paramètres essentiels, comme la nature et la quantité d'agent chimique, la teneur en eau lors de la réaction, le profil de température et, dans une moindre mesure, le temps de réaction.

L'homme du métier considère généralement qu'il peut se produire des mécanismes divers lors de la réaction de dextrinification de l'amidon.

La réaction d'hydrolyse est significative au début de la transformation et ceci dès 50°C. Liée à la présence d'acide et d'une quantité d'eau encore suffisante, elle diminue la masse moléculaire.

La réaction de condensation ou réversion forme une liaison $\alpha(1,6)$ à partir d'un alcool primaire d'une chaîne et de l'extrémité réductrice d'une autre chaîne. Elle est favorisée par des températures inférieures ou proches de 150°C.

La réaction de « transglucosydation », formant une liaison $\alpha(1,6)$ en coupant une liaison $\alpha(1,4)$ sans libérer d'eau, est prédominante à des températures supérieures à 150°C. Permettant l'obtention de molécules davantage branchées, elle est essentielle à l'expression des propriétés des dextrines, en particulier, des dextrines jaunes.

D'autres réactions ont également lieu, telles que l' « anhydrisation » interne, entre carbones 1 et 6, ou la recombinaison issue de la réaction entre une extrémité réductrice et un groupement hydroxyle en C2, C3 ou C4.

L'importance relative de ces phénomènes confèrent aux dextrines des propriétés spécifiques.

Dans la transformation des dextrines blanches, le mécanisme prépondérant est l'hydrolyse. Il en découle que ces dextrines blanches présentent soit une masse moléculaire élevée avec une faible solubilité dans l'eau, soit le contraire. Dans le cas des dextrines jaunes, l'hydrolyse est importante et l'ensemble des mécanismes décrits ci-dessus ont une importance égale, ce qui aboutit à des produits de faible masse moléculaire, généralement rebranchés, présentant une forte solubilité dans l'eau.

Les propriétés des dextrines découlent donc de la compétition des différents mécanismes réactionnels complexes décrits précédemment. La Demanderesse est parvenue, grâce à un procédé utilisant des conditions opératoires particulières, à fabriquer à partir d'amidon, un amidon modifié présentant des propriétés *a priori* contradictoires, c'est-à-dire présentant une solubilité dans l'eau élevée, mais également une haute masse moléculaire. Sans être liée à une quelconque théorie, la Demanderesse explique l'obtention de cet amidon modifié par le choix de conditions permettant de favoriser plus préférentiellement que la normale des réactions de rebranchements ou de recombinaisons, qui augmentent la masse moléculaire, tout en limitant les réactions de coupures, qui diminuent la masse moléculaire (réactions d'hydrolyse). La proportion relative de ces réactions et mécanismes mis en jeu dans des conditions bien spécifiques aboutit à des structures macromoléculaires de haute masse et présentant une solubilité dans l'eau élevée.

La Société Demanderesse est parvenue à obtenir cet amidon modifié en réalisant la réaction sur un amidon de forme granulaire en utilisant des conditions spécifiques.

En l'espèce, pour obtenir l'amidon modifié de l'invention, qui est une dextrine, la Demanderesse a mis au point un procédé de modification d'amidon qui comprend :

- une étape d'introduction d'au moins un amidon granulaire dans un réacteur ;
- une étape d'introduction dans ledit réacteur d'au moins un agent acide choisi parmi les acides forts;
- une étape de modification de l'amidon dans ledit réacteur ;
- une étape de récupération de l'amidon modifié lors de l'étape précédente ;

dans lequel au moins une partie de l'étape de modification est réalisée avec :

- un taux d'humidité de l'amidon compris entre 1 et 3% ;
- une quantité d'acide introduite comprise entre 0,003 et 0,020 moles d'acide par kg d'amidon sec, préférentiellement entre 0,006 et 0,015 moles, plus préférentiellement entre 0,008 et 0,012 moles ;

- et une température du réacteur comprise entre 160 et 215°C, préférentiellement entre 170 et 210°C.

On récupère en fin de procédé un amidon modifié, qui présente la masse moléculaire et la solubilité définies précédemment. La structure de l'amidon modifié obtenu est généralement granulaire.

La durée de l'étape de modification, appelé « temps de contact » par la suite, est avantageusement compris entre 1 et 10 minutes, préférentiellement entre 3 et 7 minutes.

La durée pendant laquelle la modification a lieu à une humidité comprise entre 1 et 3%, est d'au moins 10 secondes, de préférence d'au moins 30 secondes, et plus préférentiellement encore d'au moins 1 minute.

Pendant toute l'étape de modification de l'amidon, il est préférable que le taux de l'amidon ne soit jamais inférieur à 1%.

Différents procédés de modification d'amidon réalisés en phase sèche, à chaud et en présence d'acide ont déjà été décrits dans l'art antérieur.

Par exemple, selon le document EP 710 670 A1, on utilise un procédé dans lequel un amidon de maïs est introduit avec une quantité massique d'acide chlorhydrique de 0,63% par rapport au poids de l'amidon, c'est-à-dire une quantité molaire d'environ 0,14 moles par kg d'amidon. La température au cours du procédé est d'au maximum 120°C et l'humidité à la fin du procédé est d'environ 11%. On obtient un amidon de faible masse moléculaire moyenne en poids, bien inférieure à 250000 Da.

On peut également citer le brevet US 6,191,116 B1, qui décrit une dextrine totalement soluble, fabriquée par un procédé dans lequel un amidon anhydre est modifié à une température allant de 170 à 210 °C, avec une quantité massique d'acide, préférentiellement de l'acide chlorhydrique, de 0,25% par rapport au poids de l'amidon, c'est-à-dire une quantité molaire d'environ 0,07 moles par kg d'amidon.

Ces procédés de l'art antérieur n'ont pas permis d'obtenir l'amidon modifié de l'invention.

L'amidon introduit lors du procédé de l'invention est dans une forme granulaire.

Au sens de la présente invention, on entend par « amidon granulaire », un amidon natif ou un amidon modifié ayant conservé une structure semi-cristalline similaire à celle mise en évidence dans les grains d'amidon présents naturellement dans les organes et tissus de réserve des végétaux supérieurs, en particulier dans les graines de céréales, les graines de légumineuses, les tubercules de pomme de terre ou de manioc, les racines, les bulbes, les tiges et les fruits.

Cet état semi-cristallin est essentiellement dû aux macromolécules d'amylopectine, l'un des deux constituants principaux de l'amidon. A l'état natif, les grains d'amidon présentent un taux de cristallinité qui varie de 15 à 45 %, et qui dépend essentiellement de l'origine botanique de l'amidon et du traitement éventuel qu'il a subi. L'amidon granulaire, placé sous lumière polarisée, présente en microscopie une croix noire caractéristique, dite « croix de Malte », typique de l'état granulaire cristallin. Pour une description plus détaillée de l'amidon granulaire, on pourra se référer notamment au chapitre II intitulé « Structure et morphologie du grain d'amidon » de S.Perez, dans l'ouvrage « Initiation à la chimie et à la physico-chimie macromoléculaires », Première édition 2000, Volume 13, pages 41 à 86, Groupe Français d'Etudes et d'Applications des Polymères.

Un granule d'amidon comprend de l'amylose, de l'amylopectine et de l'eau. Le taux d'humidité de l'amidon granulaire, dans les conditions standard, varie selon la nature botanique de l'amidon. En effet, l'amidon granulaire comprend une quantité intrinsèque d'eau et le taux d'humidité dans cet amidon est généralement compris entre 10 et 20%. A titre d'exemples, un amidon de maïs présente une humidité dans les conditions standard d'environ 13%, tandis qu'une fécule de pomme de terre présente une humidité d'environ 18%. Ainsi, lorsqu'on ajoute 1% d'eau à un amidon de maïs, on obtient un amidon présentant une humidité de 14% environ.

Selon le procédé de l'invention, au moins une partie de l'étape de modification de l'amidon est réalisée avec un faible taux d'humidité dans l'amidon, par exemple compris entre 1 et 3%. Il est précisé que le taux d'humidité de l'amidon consiste au ratio massique eau/amidon sec et qu'il peut être mesuré selon la norme ISO 1666:1996.

L'étape de modification est réalisée à l'aide d'un agent acide choisi parmi les acides forts. L'étape d'introduction de l'agent acide utile à l'étape de modification peut être réalisée à l'aide d'une solution aqueuse acide. La quantité de solution acide ainsi introduite dans le réacteur est faible, avantageusement entre 0 et 10% de la masse en amidon sec, préférentiellement entre 0,5 et 4%.

Par acide fort, l'homme du métier entend un acide présentant un pKa < -1,7. Cet agent acide peut être choisi notamment parmi l'acide méthane sulfonique, l'acide sulfurique, l'acide chlorhydrique ou l'acide nitrique, ou un de ses mélanges.

Avantageusement, l'agent acide est l'acide méthane sulfonique, l'acide sulfurique, l'acide chlorhydrique ou un mélange d'au moins deux de ces acides, de préférence l'acide sulfurique. Dans le procédé selon l'invention, la quantité d'agent acide est comprise entre 0,003 et 0,020 moles d'acide pour 1 kg d'amidon sec, ce qui équivaut dans le cas de l'acide chlorhydrique à des quantités massiques d'acide par rapport à l'amidon comprises dans des quantités allant environ de 0,01 à 0,08% (sec/sec) et dans le cas de l'acide sulfurique ou de l'acide méthane sulfonique, à des quantités massiques d'acide par rapport à l'amidon comprises dans des quantités allant environ de 0,03 à 0,2% (sec/sec).

L'étape d'introduction de l'agent acide dans le réacteur peut être réalisée simultanément avec l'étape d'introduction de l'amidon, par exemple par introduction d'un mélange d'amidon et d'acide. On peut réaliser ledit mélange avant leur introduction dans le réacteur par simple mélange mécanique. Un exemple de mélangeur utilisable à ce titre est le CB 20 commercialisé par LÖDIGE®. Généralement, l'acide est introduit dans le réacteur sous forme de solution aqueuse d'acide.

La quantité totale d'eau de l'amidon est constituée de la quantité de l'eau intrinsèquement contenue dans l'amidon et de la quantité d'eau éventuellement ajoutée à cet amidon dans le réacteur. Le taux d'humidité de l'amidon lors du procédé est le rapport massique de la quantité totale d'eau sur la somme de la quantité totale d'eau et d'amidon anhydre. Il est avantageux que le taux d'humidité de l'amidon au début de la réaction ne dépasse pas 35%, qu'il soit de préférence inférieur à 25%, plus préférentiellement inférieur à 18%, et même inférieur à 16%.

Le procédé de modification de l'amidon selon l'invention peut être conduit dans tout type de réacteur, par exemple un réacteur *batch* ou un réacteur tubulaire continu. Préférentiellement, l'étape de modification est conduite dans le turboréacteur linéaire cylindrique précédemment décrit qui est bien connu de l'homme du métier. Un tel type de réacteur est commercialisé par exemple par la société VOMM® et est décrit en détail dans le document EP 710 670 A1. Le turboréacteur comprend un axe de rotation muni de pâles, qui a pour fonction de convoyer de façon continue l'amidon. L'amidon est introduit en tête du turboréacteur, puis est convoyé à l'aide des pâles à travers le réacteur. Le temps de contact peut être choisi en modifiant la vitesse de rotation de l'axe. On peut également augmenter ces temps en réalisant au moins deux passages de l'amidon dans le turboréacteur.

Pour réaliser l'étape de modification, il est nécessaire d'éliminer une partie de l'eau de l'amidon puisque comme expliqué ci-dessus, dans les conditions standard, le taux d'humidité de l'amidon granulaire est compris entre 10 et 20%. On peut donc procéder à une étape de séchage préalable de l'amidon avant d'effectuer l'étape de modification proprement dite.

On peut utiliser tout sécheur connu de l'homme du métier pour réaliser cette étape de séchage, par exemple une étuve, un lit fluidisé ou un sécheur de type « turbosécheur ». Un turbosécheur est réalisé dans un turboréacteur en faisant circuler dans ledit turboréacteur un flux d'air, appelé dans la suite de la description « flux de séchage ». Ce turbosécheur est également décrit en détail dans le document EP 710 670 A1 cité précédemment.

L'air du flux de séchage a de préférence une température comprise entre 50 et 250°C, de préférence entre 150 et 220°C. On peut faire aussi varier le débit d'air du flux. On peut choisir de faire circuler le flux de séchage dans le sens de convoyage de l'amidon ou dans le sens contraire. Préférentiellement, le flux d'air parcourt dans le sens de convoyage. Le flux de séchage peut avoir un débit compris entre 10 et 1000 $Nm^3/h$, par exemple de 30 à 500 $Nm^3/h$. Les conditions du flux de séchage exposées ci-dessus sont cependant choisies pour que le taux d'humidité dans l'amidon soit compris entre 1 et 3% pendant au moins une partie de l'étape de modification.

Avantageusement, le réacteur est un turboréacteur et on réalise simultanément le séchage et la modification de l'amidon par utilisation d'un flux de séchage.

L'étape d'introduction de l'agent acide dans le turboréacteur peut être réalisée simultanément avec l'étape d'introduction de l'amidon, par exemple par introduction d'un mélange d'amidon et d'acide. On peut réaliser ledit mélange avant leur introduction dans le turboréacteur par simple mélange mécanique. Un exemple de mélangeur mécanique utilisable à ce titre est le CB 20 commercialisé par LÖDIGE®.

Ainsi, tout préférentiellement, le procédé de modification d'amidon comprend :

- une étape de mélange d'au moins un amidon granulaire avec une solution aqueuse comprenant un agent acide choisi parmi les acides forts ;
- une étape d'introduction du mélange formé lors de l'étape précédente dans un turboréacteur en présence d'un flux de séchage ;
- une étape de modification de l'amidon dans ledit turboréacteur ;
- une étape de récupération de l'amidon modifié obtenu lors de l'étape précédente ;

dans lequel au moins une partie de l'étape de modification est réalisée avec :

• un taux d'humidité de l'amidon compris entre 1 et 3% ;

• une quantité d'acide introduite comprise entre 0,003 et 0,020 moles d'acide par kg d'amidon sec, préférentiellement entre 0,006 et 0,015 moles, voire entre 0,008 et 0,012 moles ;

• et une température du réacteur comprise entre 160 et 215°C, préférentiellement entre 170 et 210°C ;

la durée de l'étape de modification étant comprise avantageusement entre 1 et 10 minutes, préférentiellement entre 3 et 7 minutes et le taux d'humidité de l'amidon pendant l'étape de modification étant supérieur à 1%.

A l'issue du procédé de modification, on peut réaliser une neutralisation de l'amidon modifié à l'aide d'une base, par exemple à l'aide de soude ou de carbonate de sodium.

Différents procédés d'obtention de l'amidon modifié selon l'invention figurent dans les exemples.

L'invention a aussi pour objet l'utilisation de cet amidon modifié dans les domaines alimentaires et industriels.

L'invention porte en particulier sur une solution aqueuse fabriquée à partir de l'amidon modifié selon l'invention. En effet, l'amidon modifié de l'invention présente l'avantage de pouvoir former aisément, par simple mélange dans l'eau et en particulier dans l'eau à température ambiante, une solution apte à coller sur de nombreux supports, que l'on nommera par la suite liant aqueux.

Le liant aqueux obtenu à partir de l'amidon modifié de l'invention, présente l'avantage d'avoir une viscosité relativement faible, même lorsque la quantité d'amidon dans le liant est importante.

Sans être liée par une quelconque théorie, la Société Demanderesse explique ces propriétés par la solubilité particulière et le poids moléculaire de l'amidon modifié conforme à l'invention.

Le liant aqueux peut être une composition aqueuse comprenant en masse de 0,01 à 90% d'amidon modifié selon l'invention, par exemple de 1 à 25%.

L'amidon selon l'invention peut être utilisé en particulier dans une sauce de couchage.

En plus de l'amidon modifié, la sauce de couchage contient en outre de l'eau et un ou plusieurs pigments.

La sauce de couchage peut comprendre, en plus de l'eau, éventuellement de faibles quantités d'au moins un autre solvant tel qu'un alcool, mais on préfère que le solvant de la sauce de couchage soit constitué d'eau.

La sauce de couchage présente avantageusement une matière sèche comprise entre 40 et 85%, de préférence entre 50 et 75%, plus préférentiellement encore entre 55 et 73%.

Des exemples de pigments appropriés comprennent les argiles comme le kaolin, mais aussi les argiles calcinées, les silicates d'aluminium hydratés, la bentonite, le carbonate de calcium, le sulfate de calcium ou gypse, les silices, en particulier les silices précipitées, le dioxyde de titane, l'alumine, le trihydrate d'aluminium, des pigments plastiques tels que ceux en polystyrène, le blanc satin, le talc, le sulfate de baryum, l'oxyde de zinc et des mélanges de deux ou plus d'entre eux.

Le ou les pigments appropriés pourront facilement être sélectionnés par un homme du métier selon le type de sauce de couchage à obtenir. Pour préparer la sauce de couchage, on peut ajouter le pigment sous forme de dispersion dans l'eau du pigment.

La sauce de couchage peut aussi contenir un ou plusieurs des polymères additionnels ayant fonction de liant, autre que l'amidon modifié de l'invention. Ce polymère additionnel peut être un polymère choisi parmi les polymères styréniques, par exemple un copolymère styrène-butadiène, styrène-acrylate ou styrène-butadiène-acrylate, les polymères de type (méth)acrylique ou de type (méth)acrylate, les polyacétates de vinyle saponifiés ou non, les amidons différents de l'amidon modifié selon l'invention, ainsi que les liants protéiques telles que la caséine, la gélatine, les protéines de soja. A titre de polymère additionnel, on préfère un polymère choisi parmi les polymères styréniques.

Ces polymères additionnels peuvent avantageusement être introduits dans la composition par l'intermédiaire d'une dispersion dans l'eau.

La sauce de couchage peut comprendre, pour 100 parts de pigments, de 1 à 100 parts d'amidon modifié, de 0 à 20 parts de polymère additionnel, la somme des parts d'amidon et de polymère additionnel allant de 3 à 100 parts. Avantageusement, la sauce de couchage comprend, pour 100 parts de pigments, de 1 à 25 parts d'amidon modifié, de 0 à 10 parts de polymère additionnel, la somme des parts d'amidon modifié et de polymère additionnel allant de 4 à 30. Préférentiellement, la sauce de couchage comprend, pour 100 parts de pigments, de 2 à 15 parts d'amidon modifié, de 2 à 7 parts de polymère additionnel, la somme des parts d'amidon et de polymère allant de 6 à 25 parts.

La sauce de couchage comprend généralement un régulateur de pH, par exemple une base telle l'hydroxyde de sodium, ou un acide tel que l'acide chlorhydrique.

Le pH de la sauce, allant généralement de 8 à 10,5, préférentiellement entre 8,5 et 10, est ajusté en ajoutant des quantités sélectionnées de régulateur de pH.

La sauce de couchage peut également comprendre des additifs classiquement utilisés dans les sauces de couchage.

A titre d'additifs, on peut citer les épaississants. Des exemples d'épaississants appropriés comprennent les épaississants synthétiques ou les épaississants d'origine naturelle tels que les éthers de cellulose comme la carboxyméthylcellulose (CMC), l'hydroxyéthylcellulose, l'hydroxypropylcellulose, l'éthylhydroxyéthylcellulose ou la méthylcellulose, les alginates tels que l'alginate de sodium, la gomme xanthane, les carraghénanes et les galactomannanes comme la gomme de guar.

D'autres additifs qui peuvent être utilisés sont les tensioactifs, par exemple les tensioactifs cationiques, les tensioactifs anioniques, non ioniques, amphotères et tensioactifs fluorés.

Des durcisseurs peuvent également être utilisés comme par exemple des composés halogènes actifs, composés vinylsulfone ou des composés époxy.

Des agents dispersants comme les polyphosphates ou les polycarboxylates peuvent aussi être utilisés.

Comme exemple d'additifs pouvant également être compris dans la sauce de couchage, on peut citer les agents améliorant la fluidité, les lubrifiants, les agents antimousse, les azurants optiques, les agents conservateurs comme par exemple les composés benzisothiazolone et isothiazolone, les agents biocides comme par exemple le métaborate, le thiocyanate et le benzoate de sodium.

D'autres additifs pouvant être cités sont également les inhibiteurs de jaunissement tels que les dérivés de sulfonate de sodium, les absorbants ultraviolets, les antioxydants.

Des agents de résistance à l'eau, qui peuvent être choisis parmi les résines cétone, les latex anioniques ou le glyoxal et/ou les agents de résistance humide ou à sec, telles que les résines à base de glyoxal, les polyéthylènes oxydés, les résines de mélamine ou urée-formaldéhyde, peuvent également être utilisés.

Des agents de réticulation, des additifs de rétention du brillant de l'encre ou des additifs de résistance aux graisses et à l'huile peuvent également être compris dans la sauce de couchage.

L'homme du métier pourra sélectionner les additifs afin d'obtenir la sauce de couchage et le papier ayant les propriétés désirées. La sauce de couchage peut comprendre, pour 100 parts de pigments, de 0 à 5 parts d'additifs.

La sauce de couchage peut être préparée par simple mélange des différents constituants de la composition : le procédé de fabrication de cette sauce peut comprendre une étape de mélange de pigments, d'amidon modifié, d'eau et d'éventuel polymère additionnel et dans lequel l'amidon modifié est introduit à la sauce sans avoir subi d'étape de cuisson préalable.

Ce procédé de préparation d'une sauce peut donc comprendre :

- • une étape de mélange de l'eau, du pigment, de l'amidon modifié selon l'invention et du polymère additionnel, voire des additifs éventuels ;

- • une étape de récupération de la sauce de couchage ;

dans lequel le procédé est réalisé à une température allant de 5 à 50°C, de préférence de 15 à 40°C.

Préférentiellement, le pigment et le polymère additionnel éventuel sont introduits sous forme de dispersion dans l'eau, ce qui permet de faciliter la préparation de la sauce.

En particulier, on peut fabriquer une sauce de couchage comme suit : on mélange à une température allant de 5 à 50°C, de préférence de 15 à 40°C, et préférentiellement à température ambiante, une dispersion de pigments, de l'eau, éventuellement une dispersion de polymère additionnel et/ou des additifs, puis on ajoute l'amidon modifié de l'invention. Après mélange, on obtient une sauce de couchage apte à être utilisée dans un procédé de couchage.

L'homme du métier pourra sélectionner les quantités de chacun des constituants afin d'avoir la viscosité qui permettra d'appliquer la composition sur le papier de manière satisfaisante lors du procédé de couchage. Par exemple, la sauce de couchage présente une viscosité Brookfield allant de 500 à 2000 mPa.s, de préférence entre 600 et 1200 mPa.s, préférentiellement entre 600 et 900 mPa.s et/ou une viscosité Hercules allant de 40 à 80 mPa.s. La viscosité Brookfield peut être mesurée à l'aide d'un viscosimètre de marque Brookfield dont la vitesse de rotation de la broche est de 100 tours/minutes. La viscosité Hercules peut être mesurée à l'aide d'un viscosimètre de marque Hercules équipé d'un bob « FF » et dont la vitesse de rotation est de 6000 tours/minute. La viscosité de la sauce augmente principalement avec la matière sèche, la quantité de pigments et les quantités d'amidon, de polymère additionnel et d'épaississant. Comme la sauce de couchage présente l'avantage de pouvoir présenter une viscosité plus basse que certaines sauces de couchage à base d'amidon de l'art antérieur, cela permet de pouvoir utiliser des quantités d'amidon modifié plus importantes dans la sauce pour une viscosité équivalente.

Il est possible de réaliser à partie de la sauce de couchage un procédé de couchage de papier comprenant au moins une étape de couchage sur un papier de ladite sauce, de préférence de 1 à 5 étapes, et plus préférentiellement encore de 2 à 3 étapes.

Ce procédé de couchage présente l'avantage de pouvoir utiliser des vitesses d'enduction supérieures que certaines sauces de couchage à base d'amidon de l'art antérieur, ce qui permet d'augmenter la productivité des procédés de couchage de papier.

Il est précisé que le terme papier englobe tout type de papier ou carton apte à subir un traitement de couchage.

Le couchage du papier peut être effectué en ligne dans la machine à papier ou sur une machine d'enduction séparée. Selon la qualité du papier ou de carton désiré et son utilisation finale, il peut être couché sur une seule ou ses deux faces. Chaque face du papier peut être couchée une seule fois ou une pluralité de fois, sur une ou ses deux faces, à condition qu'au moins l'une des couches soit réalisée à partir de la sauce de couchage fabriquée à partir de l'amidon modifié de l'invention. A titre d'exemple, un papier couché de haute qualité comprend généralement trois couches par côté. Pour réaliser une couche, on réalise tout d'abord une étape de revêtement suivie d'une étape de séchage.

L'étape de revêtement de papier peut être réalisée par n'importe quel procédé de revêtement connu de l'homme du métier. Il peut être réalisé par exemple par couchage lame d'air, couchage crayon, couchage barre lisse, couchage barre fileté, par pulvérisation, couchage lame, couchage Rideau, couchage size-press, du couchage film press, les techniques dites de *brush coating, cast coating, gravure coating, jet applicator coating, short dwell coating, slide hopper coating, flexographic coating et reverse roll coating.*

Après l'étape de revêtement, la couche est obtenue par une étape de séchage. Cette étape de séchage peut être réalisée par un séchage à l'air, par convection, par contact, par radiation, par exemple par radiation infra-rouge. Eventuellement, le procédé de couchage peut comprendre une étape de calandrage, ce qui permet d'augmenter le brillant et le lissé du papier couché.

L'étape de calandrage est généralement réalisée en passant le papier revêtu et séché dans une calandre ou entre des rouleaux qui sont généralement recouverts d'élastomères. Pour de meilleurs résultats, le calandrage peut être effectué avec des rouleaux chauffés.

Le papier couché obtenu à partir de ce procédé de couchage présente des meilleures propriétés, en particulier une résistance à l'état humide supérieure à celles des papiers couchés obtenus à partir des sauces de couchage à base d'amidon de l'art antérieur.

Chaque couche obtenue par le procédé de l'invention peut comprendre une quantité de matière allant de 1 à 30g/m$^2$, par exemple de 4 à 25g/m$^2$, préférentiellement de 6 à 20g/m$^2$.

Le papier couché peut comprendre de 1 à 5 couches de couchage, de préférence de 2 à 3 couches de couchage, dont l'une au moins est obtenue à partir de la sauce de couchage comprenant l'amidon modifié de l'invention.

Le papier ainsi obtenu présente une résistance à l'arrachement humide améliorée par rapport à celle des papiers couchés de l'art antérieur dont les couches sont à base d'amidon, cette résistance pouvant être, selon la méthode décrite dans les exemples, supérieure à 60 m/s, avantageusement supérieure à 75 m/s et préférentiellement supérieure à 85 m/s.

Du fait de ses propriétés supérieures, ce papier couché peut être avantageusement utilisé dans un procédé d'impression comme par exemple une impression de type off set, héliogravure, rotogravure, lithogravure, jet d'encre ou flexographie, préférentiellement de type *off-set.*

La présente invention va maintenant être illustrée en détail par le biais d'exemples qui ne limitent en rien l'invention revendiquée.

## Exemples de fabrication d'amidon

On utilise comme matières premières pour la réalisation de l'amidon modifié selon l'invention, un amidon de maïs natif, de l'acide et de l'eau. Les modifications de l'amidon ont été réalisées à l'aide d'acide chlorhydrique (HCl), d'acide sulfurique ($H_2SO_4$) ou d'acide méthane sulfonique ($CH_4O_3S$).

Cet amidon modifié est obtenu par réaction de dextrinification selon le protocole ci-dessous.

Un pré-mélange de ces trois matières premières est réalisé sur un mélangeur type LÖDIGE CB20 en introduisant de l'amidon de maïs, dont l'humidité relative est d'environ 13 %, un des acides précités et de l'eau. Le taux d'humidité du pré-mélange ainsi formé, ainsi que la quantité de moles d'acide par kilogramme d'amidon natif, sont repris dans les Tableaux 1 et 2, qui récapitulent les différents essais réalisés. Ils sont reportés respectivement dans les colonnes intitulées « %eau » et « n ».

Le pré-mélange est ensuite introduit en continu à un débit massique de 50 kg/h et convoyé à travers un turbosécheur linéaire cylindrique commercialisé par le constructeur VOMM, présentant un axe de rotation tournant à une vitesse de 1000 tours/min muni de pales. La température du réacteur est reprise pour les différents essais dans les Tableaux 1 et 2. Un courant d'air, ayant une température identique à celle du réacteur, est introduit dans le turboréacteur et parcourt ce réacteur dans le sens convoyage de l'amidon avec un débit de 50 Nm$^3$/h, ce qui permet de sécher l'amidon pendant la réaction. L'humidité de l'amidon (Th) est également analysée selon la norme ISO 1666:1996 en fin de réaction.

Les essais 1 à 14 sont réalisés en effectuant un passage dans le turbosécheur réglé à la température T, et on récupère l'amidon modifié au bout de ce passage. La durée de l'étape de modification de l'amidon est d'environ 4 minutes. Ces essais 1 à 14 sont regroupés dans le tableau 1.

Les essais 15 à 22 sont réalisés en effectuant un premier passage de l'amidon dans le turbosécheur à la température T1, puis un deuxième passage à la température T2. La durée du procédé de modification de l'amidon est d'environ 8 minutes. Ces essais 15 à 22 sont regroupés dans le tableau 2.

Pour les différents essais, la solubilité de l'amidon modifié ainsi que sa masse moléculaire moyenne en poids, sa masse moléculaire moyenne en nombre et l'indice de polydispersité ($M_w/M_n$) sont reportés dans les Tableaux 1 et 2. Pour des raisons de lisibilité, la lettre « I » figure dans la colonne type d'essai du tableau pour les amidons modifiés selon l'invention, tandis que « CP » est indiqué dans la même colonne lorsqu'il s'agit d'amidons modifiés comparatifs. Les fractions massiques des molécules d'amidon constituant les amidons modifiés sont également mesurées pour certains de ces amidons.

L'analyse de ces fractions massiques a été réalisée pour les amidons modifiés obtenus aux exemples 2, 14, 15, 16, 21 et 22, ainsi que pour le produit C* ICOAT 07520, commercialisé par la société Cargill, et qui présente une masse moléculaire moyenne en poids de 230000 Da et une solubilité de 67%.

Les différents essais montrent que le procédé de l'invention, qui utilise lors de l'étape de modification des conditions particulières, permet d'obtenir des amidons modifiés combinant des propriétés jusqu'ici incompatibles : une solubilité élevée ainsi qu'une masse moléculaire en poids très élevée.

Tableau 1 : Fabrication d'amidons modifiés avec un passage dans le turbosécheur

| Type essai | Ex. | Conditions de préparation du mélange d'amidon | | | Conditions du procédé de modification | | Caractéristiques amidon modifié obtenu | | | |
|---|---|---|---|---|---|---|---|---|---|---|
| | | acide | n (mol/kg) | % eau | T (°C) | Th (%) | Solubilité (%) | $M_w$ (Da) | $M_n$ (Da) | $M_w/M_n$ |
| CP | 1 | HCl | 0,011 | 22,5 | 140 | 7,4 | 2,8 | 422112 | non calculé | non calculé |
| I | 2 | HCl | 0,011 | 14 | 180 | 2,6 | 70,3 | 660312 | 30023 | 22,0 |
| I | 3 | HCl | 0,011 | 14 | 200 | 1,8 | 81,1 | 480214 | 18131 | 26,5 |
| CP | 4 | HCl | 0,011 | 14 | 220 | 1,4 | 91,3 | 219851 | 13005 | 16,9 |
| I | 5 | HCl | 0,011 | 16 | 200 | 1,7 | 80,5 | 440245 | 20120 | 21,9 |
| CP | 6 | HCl | 0,009 | 22,5 | 140 | 5,3 | 65,5 | 169250 | 25830 | 6,6 |
| I | 7 | HCl | 0,009 | 22,5 | 200 | 2,1 | 56,5 | 664321 | 27412 | 24,2 |
| I | 8 | HCl | 0,009 | 16 | 180 | 2,6 | 57 | 1204325 | 54398 | 22,1 |
| I | 9 | HCl | 0,009 | 16 | 200 | 1,9 | 71 | 900450 | 35035 | 25,7 |
| CP | 10 | HCl | 0,009 | 16 | 220 | 1,8 | 86 | 480217 | 21872 | 22,0 |
| I | 11 | HCl | 0,009 | 14 | 180 | 3 | 51 | 1200138 | 48231 | 24,9 |
| I | 12 | HCl | 0,009 | 14 | 200 | 2,3 | 70 | 702543 | 27432 | 25,6 |
| CP | 13 | HCl | 0,009 | 14 | 220 | 1,9 | 87,5 | 289342 | 16350 | 17,7 |
| I | 14 | $H_2SO_4$ | 0,011 | 22,5 | 200 | 2,4 | 60,4 | 1204069 | 64397 | 18,7 |

Tableau 2 : Fabrication d'amidons modifiés avec deux passages dans le turbosécheur

| Type essai | Ex. | Conditions de préparation du mélange d'amidon | | | Conditions de modification de l'amidon | | | Caractéristiques amidon modifié obtenu | | | |
| --- | --- | --- | --- | --- | --- | --- | --- | --- | --- | --- | --- |
| | | acide | n (mol/kg) | %eau | T1 (°C) | T2 (°C) | Th (%) | Solubilité (%) | $M_w$ (Da) | $M_n$ (Da) | $M_w/M_n$ |
| I | 15 | HCl | 0,011 | 22,5 | 200 | 140 | 1,8 | 62,8 | 398326 | non calculé | non calculé |
| CP | 16 | HCl | 0,022 | 16 | 200 | 140 | 1,7 | 90 | 25523 | 5987 | 4,3 |
| CP | 17 | HCl | 0,022 | 16 | 170 | 180 | 1,4 | 98 | 24123 | non calculé | non calculé |
| CP | 18 | HCl | 0,011 | 22,5 | 140 | 140 | 3,7 | 8,3 | 1100421 | non calculé | non calculé |
| I | 19 | HCl | 0,011 | 22,5 | 140 | 200 | 2,8 | 61,9 | 422478 | 20365 | 20,7 |
| I | 20 | HCl | 0,011 | 22,5 | 200 | 200 | 1,6 | 80,1 | 326185 | 18238 | 17,9 |
| CP | 21 | HCl | 0,011 | 16 | 140 | 140 | 3 | 65,3 | 196580 | 19857 | 9,9 |
| I | 22 | $CH_4O_3S$ | 0,011 | 22,5 | 200 | 200 | 2 | 62,5 | 983247 | 46237 | 21,3 |

Tableau 3 : Fractions massiques de molécules d'amidon dans l'amidon modifié de l'invention

| Fractions | Ex. 2 | Ex. 14 | Ex. 15 | Ex. 16 | Ex. 21 | Ex. 22 | C* 07520 |
|---|---|---|---|---|---|---|---|
| $M \geq 1000000$ | 8,5 | 18,4 | 6,2 | 0 | 14,6 | 0,9 | 3,5 |
| $10e6 > M \geq 10e5$ | 36,9 | 43 | 31,9 | 2,1 | 40,7 | 25,1 | 45,7 |
| $10e5 > M \geq 10e4$ | 44,9 | 36,7 | 44,1 | 70,6 | 39,8 | 59,7 | 45,1 |
| $10e4 > M$ | 9,6 | 1,9 | 17,8 | 27,3 | 4,9 | 14,4 | 5,8 |

## Exemples applicatifs

Afin d'illustrer l'avantage de l'amidon modifié selon l'invention, celui-ci va maintenant être utilisé pour la fabrication de sauces de couchage dans les exemples qui suivent.

## Produits utilisés

Les produits suivants ont été utilisés pour réaliser les sauces de couchage :

Latex styrène-butadiène
Pigment 1 : Dispersion de carbonate de calcium
Pigment 2 : Dispersion de kaolin
Epaississant synthétique
Azurant optique
Eau
Solution aqueuse de soude à une concentration de 10 mol.l$^{-1}$

Les amidons modifiés utilisés dans les sauces de couchage sont les suivants :

Amidons modifiés de l'invention : amidon de l'ex.2, 7, 14, 15 et 22.
Amidons comparatifs : C*ICOAT 07520, amidon de l'ex. 16 et 21.

## Préparation de la sauce

La sauce de référence (Réf.), exempte d'amidon modifié, contient 10 parts de latex. Pour préparer cette sauce, les dispersions de pigment sont mises sous agitation dans une cuve en inox à l'aide d'une défloculeuse motorisée Raineri. Le latex est introduit au bout de 10 minutes sous agitation dans la cuve. Au bout de 30 minutes, les autres constituants, c'est-à-dire l'épaississant, l'azurant optique, l'eau et la solution aqueuse de soude, sont également introduits successivement dans la cuve, chacun de ces constituants étant ajouté 5 minutes après le précédent. La quantité de soude est ajustée pour obtenir un pH de la sauce de 9.
Les viscosités Brookfield et Hercules de la sauce obtenue sont ensuite mesurées selon les méthodes décrites précédemment.
Les sauces utilisant l'amidon selon l'invention (I) et comparatives (CP) diffèrent de la composition de référence en ce que 4 parts de latex sont substituées par 7 parts d'amidon modifié.
Ces sauces sont préparées de la même manière que la sauce de référence, à la différence près que l'on introduit l'amidon modifié dix minutes après l'introduction de latex, et que l'on introduit les autres constituants vingt minutes après l'introduction d'amidon modifié.
La composition des sauces est indiquée dans le tableau 4 ci-après.

## Réalisation des papiers

Les enductions ont été réalisées sur un papier de base, de grammage 80g/m$^2$, à l'aide du pilote helicoater, fabriqué par DIXON, avec une dépose de sauce de 7 à 8g/m$^2$, la vitesse de la machine étant adaptée à la rhéologie de la sauce. Le séchage par infrarouge est réalisé à l'aide de 14 lampes de 2000 W chacune et le temps de séchage est de 30 secondes.
Les papiers ont été calandrés en deux passages à 60-65°C avec une pression de 150daN/cm sur une calandreuse feuille à feuille du fabricant ABK.

**Caractéristiques des papiers obtenus**

La brillance des papiers obtenus après calandrage a été mesurée selon la norme TAPPI T 480.

Les mesures de l'arrachage à l'état sec ont été déterminées à l'aide d'un appareil IGT AIC 2-5 équipé de molettes de 50 mm revêtues d'un blanchet, à l'aide d'une encre IGT 3803, sur des éprouvettes de papier de format 340 x 55 mm.

On dépose l'encre sur les molettes avant transfert sur le papier. Le transfert est réalisé en appliquant sur la molette une pression de 625 N, la vitesse du porte-échantillon étant en accélération constante et atteignant une vitesse finale de 4m/s en bout d'échantillon.

L'arrachage à l'état humide est mesuré selon le même protocole, à la différence que la vitesse du porte-échantillon est constante à 0,2 m/s et que l'on réalise, avant transfert de l'encre, un transfert d'eau. Ce transfert est réalisé à l'aide d'une première molette tramée de 38 mm et en appliquant sur cette molette une pression de 400 N.

Les caractéristiques des sauces de couchage réalisées, ainsi que des papiers obtenus à partir de ces sauces, sont détaillées dans le tableau ci-dessous.

Tableau 4 : Résultats applicatifs

| Type essai | n° amidon | Brookfield (mPa.s) | Hercules (mPa.s) | Vitesse maximum (m/min) | IGT sec (m/s) | IGT humide (m/s) | Brillant (%) |
|---|---|---|---|---|---|---|---|
| Ref | Pas d'amidon | 500 | 35 | 1300 | 2,18 | 93 | 60,7 |
| I | 2 | 640 | 44 | 1100 | 2,36 | 86,7 | 59,1 |
| I | 7 | 750 | 51 | 1100 | 2,18 | 90,5 | 60,8 |
| I | 14 | 600 | 51 | 1200 | 2,18 | 93,1 | 59,9 |
| I | 15 | 700 | 53 | 1200 | 2,36 | 92,2 | 60,9 |
| CP | 16 | 730 | 46 | 1300 | 2,36 | 71,2 | 58, 1 |
| CP | 21 | 830 | 51 | 1200 | 2,18 | 67,5 | 58,4 |
| I | 22 | 690 | 53,5 | 1100 | 2,36 | 91 | 59,8 |
| CP | C*ICOAT 07520 | 980 | 56 | 1100 | 2,54 | 81,9 | 57,2 |

Les essais ont montré que les amidons modifiés selon l'invention 2, 7, 14, 15 et 22 permettent d'obtenir des sauces de couchage qui peuvent être appliquées à une vitesse proche de celle de la sauce de couchage de référence exempte d'amidon. Certaines de ces sauces peuvent même être appliquées à la même vitesse que cette sauce de référence. Ceci est également montré par la viscosité Brookfield des sauces de couchage obtenues à partir des amidons selon l'invention, qui sans être aussi faible que la viscosité de la sauce de référence, est plus faible en comparaison de la viscosité des sauces comparatives.

Le brillant du papier couché obtenu est également supérieur à celui des papiers couchés comparatifs.

La résistance à l'arrachement sec est similaire, et ceci quel que soit le papier. Cependant, la résistance à l'arrachement humide est largement améliorée puisqu'elle atteint un niveau proche, voire identique, à celle du papier couché de référence. Ceci est particulièrement vrai si l'on compare les papiers obtenus à partir des compositions comprenant l'amidon de l'invention avec ceux obtenus à partir des compositions 16 et 21, qui sont conformes à l'enseignement du document EP 1 964 969 A1.

**Revendications**

1. Procédé d'obtention d'une dextrine présentant :

 • une masse moléculaire moyenne en poids allant de 250 000 à 1 400 000 Da, mesurée par chromatographie d'exclusion stérique de type HPSEC-MALLS;
 • une solubilité, mesurée selon un test A, allant de 50 à 85%.
 • un poids total des dites dextrines comprenant :

◦ une fraction massique comprise entre 5 et 25% de molécules d'amidon de masse moléculaire supérieure à 1 000 000 Da,
◦ une fraction massique comprise entre 25 et 50% de molécules d'amidon de masse moléculaire supérieure à 100 000 Da et inférieure ou égale à 1 000 000 Da,
◦ une fraction massique comprise entre 30 et 50% de molécules d'amidon de masse moléculaire supérieure à 10 000 Da et inférieure ou égale à 100 000 Da,
◦ une fraction massique inférieure à 20% de molécules d'amidon de masse moléculaire inférieure ou égale à 10 000 Da,

ledit procédé étant **caractérisé en ce qu'**il comprend :

- une étape d'introduction d'au moins un amidon granulaire dans un turboréacteur comme décrit en détail dans le document EP710670A1;
- une étape d'introduction dans ledit turboréacteur d'au moins un agent acide choisi parmi les acides forts ;
- une étape de modification de l'amidon dans ledit turboréacteur ;
- une étape de récupération de l'amidon modifié lors de l'étape précédente ;

dans lequel au moins une partie de l'étape de réaction de modification est réalisée avec :

- un taux d'humidité de l'amidon compris entre 1 et 3% ;
- une quantité d'acide introduite comprise entre 0,003 et 0,020 moles d'acide par kg d'amidon sec ;
- et une température du turboréacteur comprise entre 160 et 215°C, préférentiellement entre 170 et 210 °C ;

et **en ce que** l'étape de modification a une durée comprise entre 1 et 10 minutes, préférentiellement entre 3 et 7 minutes.

2. Procédé selon la revendication 1, **caractérisé en ce que** l'indice de polydispersité de la dextrine est supérieur à 5, de préférence supérieur à 10, et plus préférentiellement encore supérieur à 15.

3. Procédé selon l'une des revendications 1 ou 2, **caractérisé en ce que** la dextrine présente une solubilité allant de 55 à 65%.

4. Procédé selon l'une des revendications 1 ou 2, **caractérisé en ce que** la dextrine présente une solubilité allant de 65 à 80%.

5. Procédé selon l'une des revendications précédentes, **caractérisé en ce que** la dextrine présente une masse moléculaire moyenne en poids allant de 380 000 Da à 1 400 000 Da.

6. Procédé selon l'une des revendications précédentes, **caractérisé en ce que** la quantité d'acide introduite est comprise entre 0,006 et 0,015 moles par kg d'amidon sec.

7. Procédé selon la revendication précédente, **caractérisé en ce que** la quantité d'acide introduite est comprise entre 0,008 et 0,012 moles par kg d'amidon sec.

8. Procédé selon l'une des revendications précédentes, **caractérisé en ce que** l'acide fort est choisi parmi l'acide méthane sulfonique, l'acide chlorhydrique et l'acide sulfurique.

9. Procédé selon l'une des revendications précédentes, **caractérisé en ce que** les étapes d'introduction d'amidon granulaire et de l'agent acide dans le turboréacteur sont réalisées simultanément, par exemple par introduction d'un mélange d'amidon et d'acide.

**Patentansprüche**

1. Verfahren zum Erhalten eines Dextrins, aufweisend:

• ein gewichtsmittleres Molekulargewicht im Bereich von 250 000 bis 1 400 000 Da, gemessen mittels sterischer Ausschlusschromatographie vom Typ HPSEC-MALLS;

• eine Löslichkeit, gemessen gemäß einem Test A, im Bereich von 50 bis 85%.

• ein Gesamtgewicht der Dextrine umfassend:

◦ einen Massenanteil zwischen 5 und 25% von Stärkemolekülen mit einem Molekulargewicht von mehr als 1 000 000 Da,

◦ einen Massenanteil zwischen 25 und 50% von Stärkemolekülen mit einem Molekulargewicht von mehr als 100 000 Da und weniger als oder gleich 1 000 000 Da,

◦ einen Massenanteil zwischen 30 und 50% von Stärkemolekülen mit einem Molekulargewicht von mehr als 10 000 Da und weniger als oder gleich 100 000 Da,

◦ einen Massenanteil von weniger als 20% von Stärkemoleküle mit einem Molekulargewicht von weniger als oder gleich 10 000 Da,

wobei das Verfahren **dadurch gekennzeichnet ist, dass** es umfasst:

- einen Schritt eines Einführens mindestens einer körnigen Stärke in einen Turboreaktor, wie im Detail in dem Dokument EP710670A1 beschrieben;
- einen Schritt eines Einführens mindestens eines Säuremittels, ausgewählt aus den starken Säuren, in den Turboreaktor;
- einen Schritt eines Modifizierens der Stärke in dem Turboreaktor;
- einen Schritt eines Gewinnens der Stärke, die während des vorherigen Schritts modifiziert wurde;

wobei mindestens ein Teil des Schrittes einer Modifikationsreaktion durchgeführt wird mit:

- einem Feuchtigkeitsgehalt der Stärke zwischen 1 und 3 %;
- einer eingeführten Säuremenge zwischen 0,003 und 0,020 Mol Säure pro kg trockener Stärke;
- und einer Turboreaktortemperatur zwischen 160 und 215 °C, vorzugsweise zwischen 170 und 210 °C;

und dadurch, dass der Schritt des Modifizierens eine Dauer zwischen 1 und 10 Minuten, vorzugsweise zwischen 3 und 7 Minuten, aufweist.

2. Verfahren nach Anspruch 1, **dadurch gekennzeichnet, dass** der Polydispersitätsindex des Dextrins größer als 5, vorzugsweise größer als 10 und noch bevorzugter größer als 15 ist.

3. Verfahren nach einem der Ansprüche 1 oder 2, **dadurch gekennzeichnet, dass** das Dextrin eine Löslichkeit im Bereich von 55 bis 65 % aufweist.

4. Verfahren nach einem der Ansprüche 1 oder 2, **dadurch gekennzeichnet, dass** das Dextrin eine Löslichkeit im Bereich von 65 bis 80 % aufweist.

5. Verfahren nach einem der vorhergehenden Ansprüche, **dadurch gekennzeichnet, dass** das Dextrin ein gewichtsmittleres Molekulargewicht im Bereich von 380 000 Da bis 1 400 000 Da aufweist.

6. Verfahren nach einem der vorhergehenden Ansprüche, **dadurch gekennzeichnet, dass** die eingeführte Säuremenge zwischen 0,006 und 0,015 Mol pro kg trockener Stärke liegt.

7. Verfahren nach dem vorhergehenden Anspruch, **dadurch gekennzeichnet, dass** die eingeführte Säuremenge zwischen 0,008 und 0,012 Mol pro kg trockener Stärke liegt.

8. Verfahren nach einem der vorhergehenden Ansprüche, **dadurch gekennzeichnet, dass** die starke Säure ausgewählt ist aus Methansulfonsäure, Salzsäure und Schwefelsäure.

9. Verfahren nach einem der vorhergehenden Ansprüche, **dadurch gekennzeichnet, dass** die Schritte des Einführens von körniger Stärke und des Säuremittels in den Turboreaktor gleichzeitig ausgeführt werden, beispielsweise durch Einführen einer Mischung aus Stärke und Säure.

**Claims**

1. Process for obtaining a dextrin showing:

   • a weight-average molecular weight ranging from 250 000 to 1 400 000 Da, determined by size-exclusion chromatography of HPSEC-MALLS;
   • a solubility, measured according to a test A, ranging from 50 to 85%;
   • with respect to the total weight of said dextrin, comprising:

      • a mass fraction of between 5 and 25% of starch molecules with a molecular weight of greater than 1 000 000 Da,
      • a mass fraction of between 25 and 50% of starch molecules with a molecular weight of greater than 100 000 Da and less than or equal to 1 000 000 Da,
      • a mass fraction of between 30 and 50% of starch molecules with a molecular weight of greater than 10 000 Da and less than or equal to 100 000 Da,
      • a mass fraction of less than 20% of starch molecules with a molecular weight of less than or equal to 10 000 Da.

   said process being **characterized in that** it comprises

      - a step of introducing at least one granular starch into a turboreactor as described in detail in the document EP 710 670;
      - a step of introducing, into said turboreactor, at least one acidic agent chosen from strong acids;
      - a step of modifying the starch in said turboreactor;
      - a step of recovering the starch modified during the preceding step;

   in which at least part of the modifying reaction step is carried out with:

      • a moisture content of the starch of between 1 and 3%;
      • an amount of acid introduced of between 0.003 and 0.020 mol of acid per kg of dry starch;
      • and a temperature of the turboreactor of between 160 and 215°C, preferably between 170 and 210°C.

   and **in that** the modifying step has a duration of between 1 and 10 minutes, preferably between 3 and 7 minutes.

2. Process according to claim 1, **characterized in that** the polydispersity index of the dextrin is greater than 5, preferably greater than 10 and more preferably still greater than 15.

3. Process according to any one of claims 1 or 2, **characterized in that** the dextrin exhibits a solubility ranging from 55 to 65%.

4. Process according to any one of claims 1 to 3, **characterized in that** the dextrin exhibits a solubility ranging from 65 to 80%.

5. Process according to any one of claims 1 to 4, **characterized in that** the dextrin exhibits a weight-average molecular weight ranging from 380 000 Da to 1 400 000 Da.

6. Process according to any one of claims 1 to 5, **characterized in that** the amount of acid introduced is between 0.006 and 0.015 mol per kg of dry starch.

7. Process according to any one of claims 1 to 6, **characterized in that** the amount of acid introduced is between 0.008 and 0.012 mol per kg of dry starch.

8. Process according to any one of claims 1 to 7, **characterized in that** the strong acid is chosen from methanesulphonic acid, hydrochloric acid and sulphuric acid.

9. Process according to any one of claims 1 to 8, **characterized in that** the steps of introducing granular starch and acidic agent to the turboreactor are carried out simultaneously, for example by introducing a mixture of starch and acid.

**EP 2 780 377 B1**

REFERENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005003456 A1
- WO 2008074957 A
- EP 1964969 A1
- EP 710670 A1
- US 6191116 B1

**Littérature non-brevet citée dans la description**

- Structure et morphologie du grain d'amidon. **S.PE-REZ.** Initiation à la chimie et à la physico-chimie macromoléculaires. Groupe Français d'Etudes, 2000, vol. 13, 41-86